Europäisches Patentamt

European Patent Office

Office européen des brevets

(11) Numéro de publication: **0 344 064**
**A1**

## DEMANDE DE BREVET EUROPEEN

(21) Numéro de dépôt: 89401413.3

(22) Date de dépôt: 24.05.89

(51) Int. Cl.⁴: **C 02 F 1/50**
C 02 F 1/76, C 02 F 1/54,
C 02 F 5/08, E 04 H 3/20

(30) Priorité: 25.05.88 FR 8806952

(43) Date de publication de la demande:
29.11.89 Bulletin 89/48

(84) Etats contractants désignés: **CH DE FR LI**

(71) Demandeur: **PAREVA, Société à Responsabilité Limitée**
**1340 Chemin de la Sablière**
**F-06640 Saint-Jeannet (FR)**

(72) Inventeur: **Legrand, Gérard**
**1340 Chemin de la Sablière**
**F-06640 Saint-Jeannet (FR)**

(74) Mandataire: **Rodhain, Claude et al**
**Cabinet Claude Rodhain 30, rue la Boétie**
**F-75008 Paris (FR)**

(54) **Produit de traitement de l'eau de piscine.**

(57) La présente invention concerne un produit de traitement de l'eau ayant des effets bactériostatiques, algistatiques, dispersants, sequestrants, régulateurs de pH, floculants, et inhibiteurs de la cristallisation.

Le but de l'invention est de réaliser un tel produit pouvant se coupler avec des produits halogènes ou des produits à base de polymères de biguanide.

Ce but est atteint à l'aide d'un produit de traitement des eaux, et notamment des eaux de piscines, caractérisé en ce qu'il comprend un polymère acrylique selon une quantité comprise entre environ 1% et 10% en poids du produit total, du phosphonate de sodium selon une quantité comprise entre environ 0,5% et 7,5% en poids du produit total, et éventuellement un ammonium quaternaire non moussant cationique selon une quantité comprise entre environ 3% et 20% en poids du produit total, ce composant n'étant pas obligatoire si le bactéricide principal est un polymère de biguanide, une solution tampon comprise entre environ 1% et 20%, et un composé choisi parmi le groupe constitué du sulfate de cuivre, du sulfate d'alumine et du polychlorure d'aluminium selon une quantité comprise entre environ 0,5% et 2% en poids du produit total, sauf si le bactéricide principal est un polymère de biguanide, le complément étant de l'eau.

Ce produit concerne plus spécialement le traitement de l'eau des piscines.

Bundesdruckerei Berlin

EP 0 344 064 A1

## Description

### Produit de traitement de l'eau de piscine

La présente invention concerne un produit de traitement de l'eau de piscine, et notamment un produit ayant des effets bactériostatiques et algistatiques, et pouvant se coupler avec d'autres produits bactéricides.

Les propriétaires de piscines souhaitent pouvoir se baigner tout au long de l'année dans une eau limpide, saine et agréable. Le personel chargé de l'entretien de la piscine veillera donc à contrôler et à maintenir un certain nombre de paramètres, et notamment le développement des bactéries et des algues, le pH, et la teneur en calcaire.

On connaît déjà un certain nombre de produits adaptés au traitement de l'eau des piscines. Les plus utilisés sont les produits halogènes, tels que le chlore ou le brome, dont les qualités bactéricides et algicides sont connues. On connaît également des systèmes "sans chlore", et notamment un produit composé d'un polymère de biguanide (demande de brevet français No. 74 00681). Or, tous ces produits nécessitent l'emploi de produits complémentaires pour lutter contre les algues, pour maintenir l'équilibre calcocarbonique de l'eau, et pour réguler le pH, c'est-à-dire la quantité d'ions H+ présents dans l'eau.

De plus, les produits halogènes sont sensibles à la chaleur, et sont plus ou moins rapidement détruits par la lumière et par les rayonnement ultraviolets. De ce fait, l'apport en chlore est difficile à réguler, et on constate en général dans les piscines privées que des périodes de sur-dosage alternent avec des périodes de sous-dosage, d'où des problèmes d'apparition d'algues et de développement des chloramines ou d'haloformes désagréables.

Les chlores organiques ont apporté une certaine amélioration, mais il est encore nécessaire de déverser dans la piscine à intervalles réguliers, des doses élevées de chlore à dissolution rapide, appelées "chlore choc". De ce fait, les industriels commercialisent ces produits sous forme d'un conditionnement contenant les deux produits, le chlore lent et le chlore choc, livrés ensemble. Dans d'autres pays, on utilise des systèmes combinant un apport de chlore lent et de chlore choc avec un produit algicide, mais ces produits, bien qu'étant à l'heure actuelle les plus sophistiqués, ne tiennent pas compte généralement de la dureté de l'eau et de sa teneur en calcaire. En effet, dans de nombreuses régions, les ions calcium et magnésium sont présents dans l'eau à des concentration importantes.

En conséquence, à l'heure actuelle on utilise des produits connus avec d'autres produits complémentaires(souvent à base de polyphosphates), qui ont un effet anticalcaire connu. Malheureusement, ces produits présentent un effet secondaire regrettable dans les piscines, puisqu'ils favorisent le développement des algues.

On utilise aussi comme sequestrant complémentaire de l'EDTA (acide éthylenédiaminetétracétique), qui pourrait avoir malheureusement des effets néfastes sur les stations d'épuration.

En outre, aucun produit n'est prévu pour contrôler les variations de pH de l'eau, et il est nécessaire d'apporter régulièrement dans l'eau des correcteurs de pH et de faire des mesures de contrôle fréquentes. Or ces mesures de contrôle nécessitent l'emploi d'appareils qui ne sont pas forcément faciles à manipuler par des particuliers, qui ne sont pas des professionnels de l'entretien des piscines.

Par ailleurs, l'eau de la piscine est très rapidement polluée, soit par l'eau ajoutée, soit par l'environnement, soit par les baigneurs eux-mêmes. Une partie de cette pollution se présente sous forme colloïdale et n'est donc pas arrêtée par les filtres. Il est donc nécessaire d'apporter des produits floculants pour grossir ces matières colloïdales et pouvoir les arrêter par filtration.

Enfin, la plupart des produits existants sont conçus pour compléter un système de traitement à base d'halogènes et ne sont pas adaptés pour être utilisés avec d'autres bactéricides tels que les polymères de biguanides.

Un premier objectif de l'invention est de réaliser un produit de traitement de l'eau de piscine présentant un effet bactériostatique et algistatique, c'est-à-dire empêchant la multiplication des bactéries et des algues, et présentant des effets floculants, dispersants, sequestrants, inhibiteurs de la cristallisation et régulateurs du pH.

Un deuxième objectif de l'invention est de réaliser un tel produit pouvant se coupler avec des produits halogènes ou des produits à base de polymères de biguanide.

Ces objectifs ainsi que d'autres qui apparaîtront par la suite sont atteints notamment à l'aide d'un produit de traitement des eaux et notamment des eaux de piscines, caractérisé en ce qu'il comprend un polymère acrylique selon une quantité comprise entre environ 1% et 10% en poids du produit total, du phosphonate de sodium selon une quantité comprise entre environ 0,5% et 7,5%en poids du produit total, un ammonium quaternaire non moussant cationique selon une quantité comprise entre environ 3% et 20%en poids du produit total, une solution tampon comprise entre environ 1% et 20% en poids du produit total et un composé choisi parmi le groupe constitué du sulfate de cuivre, du sulfate d'alumine et du polychlorure d'aluminium, selon une quantité comprise entre environ 0,5% et 2%en poids du produit total, le complément étant de l'eau.

D'autres caractéristiques et avantages de l'invention apparaîtront à la lecture de la decription suivante d'un mode de réalisation préférentiel de l'invention, donné à titre d'exemple illustratif.

Le produit de traitement des eaux de piscine, selon la présente invention, comprend un polymère acrylique cationique ou anionique selon une quantité comprise entre environ 1% et 10%, du phosphonate de sodium, (neutralisé ou non avec une solution de soude pour obtenir le pH désiré), selon une quantité comprise entre environ 0,5% et 7,5%, un ammonium quaternaire non moussant cationique selon une quantité comprise entre environ 3% et 20%, une solution tampon selon une quantité comprise entre environ 1% et 20%, et un composé choisi parmi le groupe constitué du sulfate de cuivre, du sulfate d'alumine et du polychlorure d'aluminium, selon une quantité comprise entre environ 0,5 et 2%. Les pourcentages sont donnés en poids par rapport au produit total.

La solution tampon se compose d'environ 0,5% à 10% d'acide acétique et environ 0,5% à 10% de tétraborate disodique. L'ammonium quaternaire est du dichlorure de diméthyliminoéthylène ou du poly (2-hydroxyéthylènediméthylimino -2- hydroxypropy- lènediméthyliminométhylène) dichloride.

Le polymère acrylique sera de préférence le polyméthacrylate de sodium.

Le produit selon l'invention peut être utilisé en combinaison avec d'autres produits présentant des effets bactéricides, tels que les halogènes ou les polymères de biguanide. Lorsque l'on utilise des halogènes, ceux-ci seront formulés séparément mais apportés en même temps dans la piscine. Dans ce cas, le complément de la formule du produit selon l'invention est de l'eau.

Lorsque l'on utilise des polymères de biguanide, ceci sont formulés avec les autres produits de la solution et représentent entre environ 10 et 30% en poids du produit total. De même, le complément de la formule est de l'eau. Il n'est alors pas obligatoire d'ajouter dans la formulation ni l'un des ammoniums quaternaires, ni l'un des trois floculants/sulfate d'aluminium, (sulfate de cuivre et polychlorure d'aluminium) ; en effet, les polymères de biguanides pourront être suffisamment algicides et floculants par eux-mêmes.

Certain des composants de la formule et notamment les phosphonates de sodium, les sulfates de cuivre, et l'ammonium quaternaire présentent un effet bactéricide ou algicide connu. Néanmoins, l'utilisation de l'ensemble des composés du produit revendiqué permet contrairement à ce qui existait précédemment, d'utiliser ces produits au minimum bactériostatique, et d'éviter ainsi les surdosages de sécurité du bactéricide principal. Ainsi on évite les phénomènes désagréables induits par le surdosage du bactéricide principal, c'est-à-dire les halogènes ou le polymère de biguanide, et on palie au sous-dosage éventuel de celui-ci. De plus, contrairement aux produits algicides généralement utilisés, la composition selon l'invention permet d'éviter l'apparition de mousse dans l'eau de la piscine. En outre, les produits de la composition ayant un effet algicide présentent par ailleurs de façon inattendue une synergie avec les effets algicides du bactéricide employé, que ce soit du chlore ou un polymère de biguanide.

Trois des produits utilisés dans le formulation permettent de lutter efficacement contre les effets induits par la présence du calcium et du magnésium dans l'eau. Ces produits sont le polyméthacrylate de sodium utilisé en couple et le phosphonate de sodium. Notamment ces produits permettent d'éviter le trouble blanc de l'eau et le dépôt de calcaire sur les parois et le fond du bassin. Ces produits combinent un effet dispersant et sequestrant. Selon que la quantité employée est plus ou moins forte, on pourrait avoir soit un simple effet préventif, en inhibant la cristallisation des sels de calcaire ou de magnésium qui se forment seulement sous forme amorphe, soit un pouvoir curatif en détruisant les cristaux de sels de calcaire ou de magnésium déjà déposés sur les parois.

L'utilisation de la solution tampon permet de réguler le pH directement, sans que les propriétaires des piscines aient à faire des mesures régulières, et soient obligés d'utiliser un instrument de mesure plus ou moins fiable et d'un emploi complexe.

Le sulfate d'alumine, ou de cuivre et le polychlorure d'aluminium sont des produits floculants qui permettent de se débarasser en permanence des matières colloïdales apportées dans la piscine.

Le procédé de fabrication de ce produit de traitement des eaux va maintenant être décrit.

Le mélange doit être réalisé sous agitation constante dans une cuve appropriée, de préférence en acier inoxydable, et à température constante pendant toute l'opération. On utilisera en préférence une eau débarrassée de ses sels.

On commence par ajouter dans la cuve le volume d'eau nécessaire, compte tenu de la dissolution des produits utilisés. On ajoute ensuite le phosphonate de sodium neutralisé éventuellement avec de la soude caustique, sauf si l'on incorpore ultérieurement du sulfate d'alumine. Dans ce cas, on ajoutera le sulfate sans neutraliser le phosphonate de sodium et on ramènera ensuite le pH à la valeur désirée. On ajoute ensuite le tampon que l'on aura de préférence préparé au préalable.O On ajoutera alors le polymère acrylique et enfin le sulfate de cuivre ou le polychlorure d'aluminium, si l'on en incorpore dans la formule. On ajoute du sulfate de cuivre ou du polychlorure d'aluminium, si l'on emploie ultérieurement un bactéricide à base de chlore. Si l'on utilise un biguanide, il n'est pas nécessaire alors d'ajouter le sulfate de cuivre ou le polychlorure d'aluminium. L'ammonium quaternaire non moussant cationique sera ajouté en dernier. Il faut éviter les précipitations et doser l'ammonium quaternaire en fonction de la nature cationique ou anionique du polymère acrylique utilisé.

Si l'on utilise un polymère de biguanide, on l'ajoutera alors au mélange.

Le produit de l'eau de traitement des eaux de piscine selon la présente invention pourra être utilisé de la manière suivante.

Si le bactéricide utilisé est un polymère de biguanide, on effectuera un dosage de départ de 1/2 litre de produit pour dix mètres cubes d'eau à traiter, puis lors de l'utilisation de la piscine, on ajoutera un dixième de litre de produit pour dix mètres cubes, tous les dix jours, et on utilisera un instrument de mesure afin de maintenir le dosage dans une gamme comprise entre 30 et 45 mg/l.

Si le bactéricide utilisé est un halogène, on devra ajouter celui-ci toutes les semaines à jour fixe en même temps qu'une dose du produit selon l'invention, précalculée par le fabricant, selon les dimensions de la piscine à traiter.

L'invention n'est pas limitée à l'exemple de réalisation qui vient d'être décrit, pour lequel on pourra prévoir d'autres variantes de réalisation sans pour cela sortir du cadre de l'invention.

## Revendications

1° - Produit de traitement des eaux, et notamment des eaux de piscines, caractérisé en ce qu'il comprend un polymère acrylique selon une quantité comprise entre environ 1% et 10% en poids du produit total, du phosphonate de sodium selon une quantité comprise entre environ 0,5% et 7,5% en poids du produit total, un ammonium quaternaire non moussant cationique selon une quantité comprise entre environ 3% et 20% en poids du produit total, une solution tampon comprise entre environ 1% et 20% en poids du produit total et un composé choisi parmi le groupe constitué du sulfate de cuivre, du sulfate d'alumine et du polychlorure d'aluminium selon une quantité comprise entre environ 0,5% et 2% en poids du produit total, le complément étant de l'eau.

2° - Produit de traitement des eaux selon la revendication 1, caractérisé en ce que l'ammonium quaternaire non moussant cationique est du dichlorure de diméthyliminoethylène.

3° - Produit de traitement des eaux selon la revendication 1, caractérisé en ce que l'ammonium quaternaire non moussant cationique est du poly (2-hydroxyethylènediméthylimino -2-hydroxypropylènediméthyliminométhylène) dichloride.

4° - Produit de traitement des eaux, selon la revendication 1, caractérisé en ce que la solution tampon comprend entre environ 0,5% et environ 10% d'acide acétique et entre environ 0,5% à environ 10% de tétraborate disodique.

5° - Produit de traitement des eaux selon la revendication 1, caractérisé en ce que le polymère acrylique est le polyméthacrylate de sodium utilisé seul ou en couple.

6° - Produit de traitement des eaux selon la revendication 1, caractérisé en ce que le phosphonate de sodium est neutralisé par de la soude afin d'ajuster le pH, et en ce qu'il ne comprend pas de sulfate d'alumine.

7° - Produit de traitement des eaux selon l'une quelconque des revendications précédentes, caractérisé en ce qu'il est compatible avec des produits bactéricides choisis parmi le groupe constitué des halogènes et des polymères de biguanide.

8° - Produit de traitement des eaux selon la revendication 7, caractérisé en ce qu'il comprend un polymère acrylique selon une quantité comprise entre environ 1 % et 10 % en poids du produit total, du phosphonate de sodium selon une quantité comprise entre environ 0,5 % et 7,5 % en poids du produit total, une solution tampon selon une quantité comprise entre environ 1 % et 20 % en poids du produit total, un polymère de biguanide selon une quantité comprise entre environ 10 % et 30 % en poids du produit total, le complément étant de l'eau.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 440 402  (INSTITUT NATIONAL DE RECHERCHE) <br> * Revendications 1,6 * <br> --- | 1 | C 02 F   1/50 <br> C 02 F   1/76 <br> C 02 F   1/54 <br> C 02 F   5/08 <br> E 04 H   3/20 |
| A | US-A-3 867 286  (QUINLAN) <br> * Résumé; revendications * <br> --- | 1 | |
| A | US-A-3 764 676  (KERST et al.) <br> * Colonne 9, ligne 56 - colonne 10, ligne 11 * <br> --- | 1 | |
| A | US-A-4 719 083  (BAKER et al.) <br> * Revendications * <br> --- | 1 | |
| A | US-A-4 098 602  (SEYMOUR et al.) <br> * Revendications * <br> --- | 1 | |
| A,P | US-A-4 789 489  (HOLLIS) <br> * Revendications 16,17 * <br> --- | 3 | |
| A | FR-A-2 143 449  (BAYER) <br> --- | | **DOMAINES TECHNIQUES RECHERCHES (Int. Cl.4)** |
| A,D | FR-A-2 323 639  (ICI) <br> ----- | | E 04 H <br> C 02 F |

Le présent rapport a été établi pour toutes les revendications

| Lieu de la recherche | Date d'achèvement de la recherche | Examinateur |
|---|---|---|
| LA HAYE | 31-07-1989 | KASPERS H.M.C. |

EPO FORM 1503 03.82 (P0402)